# EUROPÄISCHE PATENTANMELDUNG

(11) **EP 2 267 291 A2**
(43) Veröffentlichungstag der Anmeldung: **29.12.2010**
(21) Anmeldenummer: 10166276.5
(22) Anmeldetag: 17.06.2010
(51) Int. Cl.: F02D 41/00, F02D 17/02, F02M 35/10

(54) **Kolbenmotor und Betriebsverfahren**

(30) Priorität: 27.06.2009 DE 102009030771
(71) Anmelder: Mahle International GmbH, 70376 Stuttgart (DE)
(72) Erfinder: Elsässer, Alfred, 75210, Keltern (DE)
(74) Vertreter: BRP Renaud & Partner

(57) **Zusammenfassung**

Die vorliegende Erfindung betrifft ein Verfahren zum Betreiben eines mehrzylindrigen Kolbenmotors, insbesondere eines Kraftfahrzeugs,
- bei dem zum Einstellen einer unterhalb einer Volllast (57) liegenden Ziellast (56) die Zylinder einer mindestens einen Zylinder aufweisenden ersten Zylindergruppe des Kolbenmotors mit einer gegenüber der Ziellast (56) reduzierten ersten Last (58) und die Zylinder einer mindestens einen Zylinder aufweisenden zweiten Zylindergruppe des Kolbenmotors mit einer gegenüber der Ziellast (56) erhöhten zweiten Last (59) betrieben werden,
- bei dem diese Lasten (58, 59) so gewählt werden, dass sich als resultierende Last die Ziellast (56) einstellt,
- bei dem diese Lasten (58, 59) so eingestellt werden, dass sich zumindest für einen Umweltparameter des Kolbenmotors, wie z. Bsp. Kraftstoffverbrauch, Stickoxidgehalt im Abgas und Partikelgehalt im Abgas, ein gegenüber einem Betrieb aller Zylinder mit der Ziellast (56) verbesserter Wert einstellt.

## Beschreibung

Die vorliegende Erfindung betrifft einen mehrzylindrigen Kolbenmotor, insbesondere eines Kraftfahrzeugs, sowie ein zugehöriges Betriebsverfahren.

Um bei mehrzylindrigen Kolbenmotoren außerhalb eines Volllastbereichs Kraftstoff zu sparen, ist es bekannt, für zumindest einen Zylinder des Kolbenmotors eine Zylinderabschaltung zu realisieren. Im Falle einer Zylinderabschaltung läuft der jeweilige Zylinder passiv mit. Sein Brennraum wird nicht befeuert. Das heißt, dem abgeschalteten Zylinder wird kein Kraftstoff zugeführt. Um bei aktivierter Zylinderabschaltung eine bestimmte Ziellast bei gleicher Drehzahl bereitstellen zu können, müssen die verbleibenden, noch aktiven Zylinder eine entsprechend höhere Last liefern.

Eine derartige Zylinderabschaltung kann zu einer asymmetrischen Belastung einer Kurbelwelle des Kolbenmotors führen.

Die vorliegende Erfindung beschäftigt sich mit dem Problem, für einen Kolbenmotor bzw. für ein zugehöriges Betriebsverfahren eine verbesserte oder zumindest eine andere Ausführungsform anzugeben, die sich insbesondere durch ein in ökologischer und/oder ökonomischer Sicht verbessertes Verhalten des Kolbenmotors auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Zylinder des Kolbenmotors in wenigstens zwei Zylindergruppen zu unterteilen, die jeweils zumindest einen Zylinder umfassen. Für den Fall, dass eine Ziellast eingestellt werden soll, die unterhalb einer Volllast des Kolbenmotors liegt, erfolgt eine asymmetrische Lastverteilung auf die wenigstens zwei Zylindergruppen. Die Zylinder der ersten Zylindergruppe werden mit einer gegenüber der Ziellast reduzierten ersten Last betrieben, während gleichzeitig die Zylinder der zweiten Zylindergruppe mit einer gegenüber der Ziellast erhöhten Last betrieben werden. Die unterschiedlichen Lasten der beiden Zylindergruppen sind dabei so gewählt, dass sich als resultierende Last die gewünschte Ziellast ergibt. Desweiteren erfolgt die Einstellung der von der Ziellast abweichenden Lasten gezielt so, dass sich für den gesamten Kolbenmotor, also für alle Zylinder gemeinsam insgesamt für wenigstens einen Umweltparameter des Kolbenmotors im Vergleich zu einem Betrieb, bei dem alle Zylinder symmetrisch mit der gleichen Ziellast betrieben werden, ein verbesserter Wert einstellt. Als Umweltparameter werden bspw. der Kraftstoffverbrauch des Kolbenmotors, der Stickoxidgehalt im Abgas des Kolbenmotors sowie der Partikelgehalt im Abgas des Kolbenmotors verstanden.

Die Erfindung nutzt hierbei die Erkenntnis, dass gerade im Teillastbereich viele Betriebspunkte existieren, in denen zwar ein mehr oder weniger guter Kompromiss zwischen zumindest zwei Umweltparametern realisiert wird, dass jedoch sowohl bei kleineren Lasten als auch bei größeren Lasten Betriebspunkte existieren, die bessere Umweltparameter zeigen oder die zumindest einen besseren Mittelwert für die Umweltparameter liefern, wenn in Summe wieder die gewünschte Ziellast bereit gestellt werden soll. Wichtig ist dabei, dass diejenigen Zylinder der ersten Zylindergruppe, die mit gegenüber der Ziellast reduzierter Last betrieben werden, weiterhin einen Beitrag zur Gesamtlast, also zur Ziellast leisten, also nicht abgeschaltet sind. Hierdurch kann für eine Vielzahl von Betriebspunkten eine im Vergleich zu einem Betrieb mit Zylinderabschaltung gleichmäßigere Belastung für die Kurbelwelle realisiert werden.

Entsprechend einer vorteilhaften Ausführungsform kann im Fall einer Änderung der Ziellast, deren Änderungsgeschwindigkeit unterhalb eines vorgegebenen Grenzwerts liegt, vorgesehen sein, dass zunächst nur die Zylinder der zweiten Zylindergruppe zur Anpassung der zweiten Last betätigt werden. Bei einem derartigen transienten Zustand oder instationärem Betrieb des Kolbenmotors werden relativ kleine und/oder langsame Laständerungen somit nur mit den Zylindern der zweiten Zylindergruppe durchgeführt, die ohnehin stärker belastet sind. Hierdurch kann einerseits rascher die gewünschte Laständerung realisiert werden. Andererseits führt das Belassen der Zylinder der ersten Zylindergruppe bei deren reduzierter Last insgesamt zu einem reduzierten Anstieg des oder der Umweltparameter bei einer positiven Laständerung und zu einer größeren Verbesserung des oder der Umweltparameter bei einer negativen Laständerung.

Sobald im Falle einer Laständerung wieder eine stationäre Ziellast erreicht wird, kann die erste Last, also die Last der Zylinder der ersten Zylindergruppe, entsprechend nachgeführt werden, wobei gleichzeitig die zweite Last, also die Last der Zylinder der zweiten Zylindergruppe entsprechend angepasst wird.

Das Verändern bzw. Einstellen des wenigstens einen Umweltparameters kann entsprechend einer besonders vorteilhaften Ausführungsform mit Hilfe von Zusatzventilen erfolgen, die in einer den Zylindern Frischluft zuführenden Frischluftanlage stromauf von den Ladungswechsel steuernden Einlassventilen angeordnet sind. Dabei ist der Kolbenmotor mit einer ersten Frischluftflut zur Frischluftversorgung der Zylinder der ersten Zylindergruppe und mit einer zweiten Frischluftflut zur Frischluftversorgung der Zylinder der zweiten Zylindergruppe ausgestattet. In diesem Fall ist in der ersten Frischluftflut ein erstes Zusatzventil zum Öffnen und Sperren der ersten Frischluftflut bzw. eines durchströmbaren Querschnitts der ersten Frischluftflut angeordnet, während ein zweites Zusatzventil in der zweiten Frischluftflut angeordnet ist, um diese bzw. deren durchströmbaren Querschnitt öffnen und sperren zu können. Mit Hilfe derartiger Zusatzventile, bei denen es sich nicht um Ansaugdrosseln handelt, lassen sich strömungsdynamische Effekte in der Frischluftversorgung ausnutzen. Beispielsweise generieren die Ladungswechselvorgänge Druckschwankungen bzw. Druckschwingungen in der Frischluftanlage, die mit Hilfe der Zusatzventile gezielt verstärkt oder verändert bzw. beeinflusst werden können.

Besonders vorteilhaft ist dabei eine Weiterbildung, bei welcher das jeweilige Zusatzventil in einem aktivierten Zustand den zugehörigen Querschnitt mit einer zur Drehzahl der Kurbelwelle des Kolbenmotors proportionalen Frequenz abwechselnd öffnet und sperrt. Beispielsweise kann das jeweilige Zusatzventil eine rotierende Klappe aufweisen. Zum Verändern des wenigstens einen Umweltparameters kann nun eine Phasenlage des jeweiligen Zusatzventils gegenüber einer Drehlage der Kurbelwelle verändert werden. Durch Verändern der Phasenlage kann der Einfluss der Durchschwingungen in der Frischluft gezielt moduliert werden.

Von besonderem Vorteil ist dabei eine Ausgestaltung, bei welcher die Zusatzventile in der jeweiligen Frischluftflut jeweils stromauf einer Einleitstelle angeordnet sind, über die eine Abgasrückführanlage Abgas von einer Abgasanlage des Kolbenmotors zur Frischluftanlage rückführt, wobei sich eine Einstellung bzw. Regelung der Abgasrückführrate durch die gezielte Betätigung der Zusatzventile, insbesondere durch deren Phasenlage relativ zur Kurbelwelle, realisieren lässt. Grundsätzlich ist es möglich, mit Hilfe der Zusatzventile Druckschwingungen in den Frischluftfluten gezielt zu verstärken. Dabei erzeugen negative Druckamplituden ein Druckgefälle zwischen einer abgasseitigen Entnahmestelle der Abgasrückführanlage und der frischluftseitigen Einleitstelle. Durch Variieren dieser negativen Druckamplituden kann eine Abgasrückführrate gezielt eingestellt werden. Untersuchungen der Anmelderin haben gezeigt, dass ein Verändern der Phasenlage des jeweiligen Zusatzventils zusätzlich zur Abgasrückführrate auch signifikanten Einfluss auf zumindest die genannten Umweltparameter besitzt. Die Erfindung schlägt somit vor, die Zusatzventile hinsichtlich ihrer Phasenlage nicht zum Einstellen gewünschter Abgasrückführraten zu nutzen, sondern zum Einstellen optimaler Werte für zumindest einen Umweltparameter bzw. zum Einstellen optimierter Kompromisse für wenigstens zwei Umweltparameter zu verwenden. Die jeweilige Abgasrückführrate ergibt sich dann durch die im Hinblick auf den wenigstens einen Umweltparameter gewählte Phasenlage des jeweiligen Zusatzventils von selbst.

Um somit die Zylinder der beiden Zylindergruppen für die unterschiedlichen Lasten hinsichtlich des jeweiligen Umweltparameters zu optimieren, lassen sich die den verschiedenen Frischluftfluten und somit auch den verschiedenen Zylindergruppen zugeordneten Zusatzventile relativ zur Kurbelwelle mit verschiedenen Phasenlagen betreiben. Besonders vorteilhaft ist dabei, dass diese Zusatzventile sehr schnell zum Verändern ihrer Phasenlage betätigt werden können. Insbesondere kann die Einstellung einer neuen Phasenlage innerhalb einer vollständigen Umdrehung der Kurbelwelle realisiert werden. Auf diese Weise können auch die Lastanpassungen innerhalb der Zylindergruppen extrem rasch realisiert werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte, schaltplanartige Prinzipdarstellung eines Kolbenmotors,
- Fig. 2: eine stark vereinfachte, teilweise geschnittene perspektivische Darstellung einer Anordnung von zwei Zusatzventilen,
- Fig. 3: eine Ansicht wie in Fig. 2 jedoch bei einem einzelnen Zusatzventil,
- Fig. 4: ein stark vereinfachtes Diagramm zur Veranschaulichung einer Phasenverschiebung zwischen einem Zusatzventil und einer Kurbelwelle,
- Fig. 5: ein stark vereinfachtes Diagramm zur Veranschaulichung eines Zusammenhangs zwischen einer Phasenverschiebung des Zusatzventils und mehreren Parametern des Kolbenmotors,
- Fig. 6: ein vereinfachtes Diagramm zur Veranschaulichung einer Abhängigkeit von Umweltparametern von einer Last des Kolbenmotors,
- Fig. 7: ein vereinfachtes Diagramm zur Veranschaulichung einer Abhängigkeit einer Luftzahl von der Last des Kolbenmotors,
- Fig. 8: ein vereinfachtes Diagramm zur Veranschaulichung eines Zusammenhangs zwischen mehreren Umweltparametern in einem stationären Betriebspunkt des Kolbenmotors.

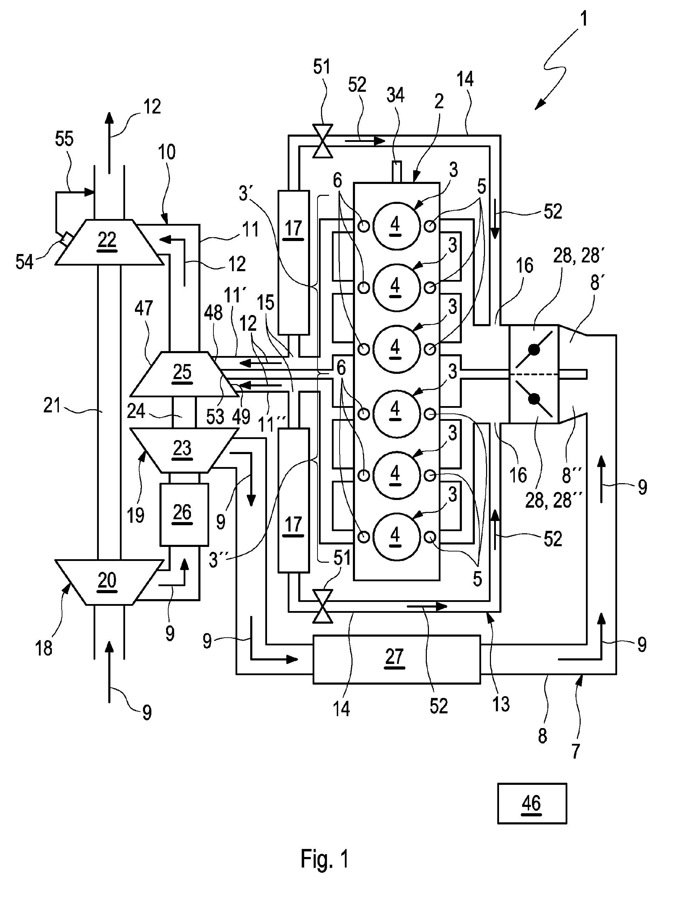

Entsprechend Fig. 1 umfasst ein Kolbenmotor 1, wie er bei Kraftfahrzeugen zur Anwendung kommen kann, z. B. einen Motorblock 2, der mehrere Zylinder 3 enthält, die jeweils einen Brennraum 4 umschließen und in denen ein nicht näher bezeichneter Kolben hubverstellbar angeordnet ist. Im Beispiel sind rein exemplarisch und ohne Beschränkung der Allgemeinheit genau sechs derartige Zylinder 3 in Reihe angeordnet. Jedem Brennraum 4 sind Gaswechselventile, nämlich Einlassventile 5 und Auslassventile 6 zugeordnet, die im Motorblock 2 angeordnet sind. Im Beispiel sind je Brennraum 4 ein Einlassventil 5 und ein Auslassventil 6 vorgesehen. Es ist klar, dass auch zwei oder mehr Einlassventile 5 bzw. zwei oder mehr Auslassventile 6 vorgesehen sein können. Der Kolbenmotor 1 dient bevorzugt zur Verwendung als Fahrzeugantrieb für Nutzfahrzeuge und Personenkraftwagen.

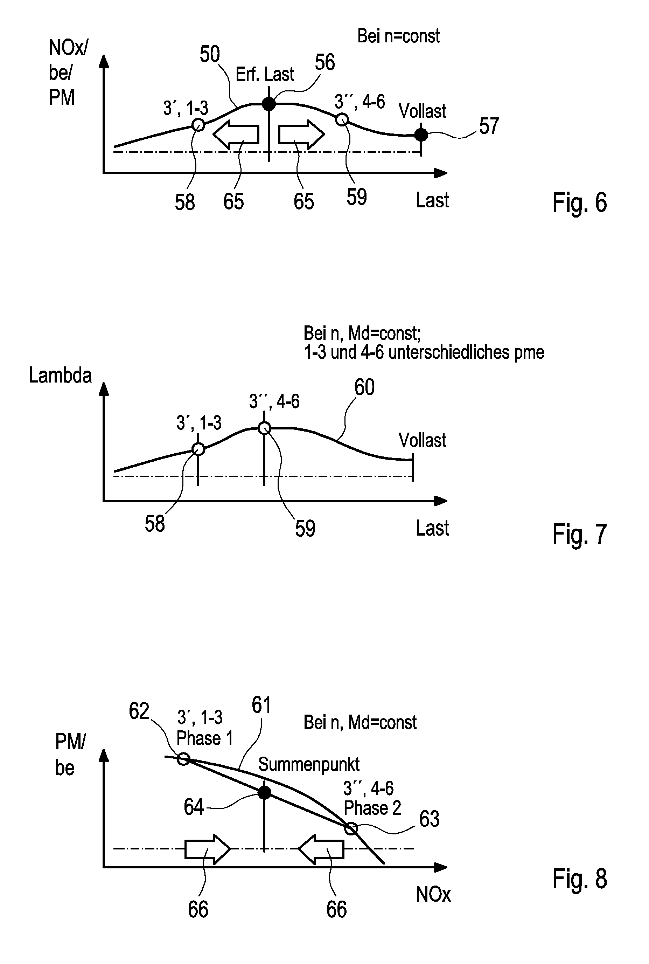

Beim Kolbenmotor 1 sind zwei Zylindergruppen ausgebildet, nämlich eine erste Zylindergruppe 3' und eine zweite Zylindergruppe 3", die in Fig. 1 durch geschweifte Klammern markiert sind und in den Diagrammen der Fig. 6 bis 8 mit 1 - 3 für die Zylinder 3 der ersten Gruppe 3' und mit 4 - 6 für die Zylinder 3 der zweiten Gruppe 3" angedeutet sind. Jede Zylindergruppe 3', 3" enthält dabei zumindest einen Zylinder 3. Im Beispiel enthält jede Zylindergruppe 3', 3" drei Zylinder 3, also eine symmetrische Aufteilung der sechs Zylinder 3 auf die beiden Zylindergruppen 3', 3". Grundsätzlich können auch mehr als zwei Zylindergruppen vorhanden sein. Grundsätzlich kann jede Zylindergruppe 3', 3" auch mehr oder weniger als drei Zylinder 3 umfassen.

Der Kolbenmotor 1 weist eine Frischluftanlage 7 auf, die zur Zuführung von Frischluft zu den Brennräumen 4 dient. Hierzu weist die Frischluftanlage 7 eine Frischluftleitung 8 auf, die einen Frischluftpfad 9 enthält, der in Fig. 1 durch Pfeile angedeutet ist. Außerdem ist der Kolbenmotor 1 mit einer Abgasanlage 10 ausgestattet, die dazu dient, Abgas von den Brennräumen 4 wegzuführen. Sie besitzt hierzu eine Abgasleitung 11, die einen Abgaspfad 12 enthält, der durch Pfeile angedeutet ist. Außerdem ist der Kolbenmotor 1 mit einer Abgasrückführanlage 13 ausgestattet, mit der es möglich ist, Abgas von der Abgasanlage 10 zur Frischluftanlage 7 zurückzuführen. Hierzu besitzt die Abgasrückführanlage 13 zumindest eine Rückführleitung 14. Im Beispiel sind zwei derartige Rückführleitungen 14 vorgesehen. Jede Rückführleitung 14 führt von einer Entnahmestelle oder Abzweigstelle 15 zu einer Einleitstelle 16. An der jeweiligen Abzweigstelle 15 ist die jeweilige Rückführleitung 14 eingangsseitig mit der Abgasleitung 11 verbunden. An der jeweiligen Einleitstelle 16 ist die jeweilige Rückführleitung 14 mit der Frischluftleitung 8 verbunden.

Im Beispiel ist die Frischluftanlage 7 zumindest in einem an die Brennräume 4 anschließenden Abschnitt zweiflutig ausgestaltet, sodass die Frischluftleitung 8 in diesem Bereich eine erste Flut 8' zur Versorgung der ersten drei Brennräume 4 und eine zweite Flut 8" aufweist, die zur Versorgung der zweiten drei Brennräume 4 dient. Die erste Frischluftflut 8' dient dabei zur Frischluftversorgung der Zylinder 3 der ersten Zylindergruppe 3', während die zweite Frischluftflut 8' zur Frischluftversorgung der Zylinder 3 der zweiten Zylindergruppe 3" vorgesehen ist. Analog dazu ist auch die Abgasanlage 10 zumindest in einem an die Brennräume 4 anschließenden Abschnitt zweiflutig ausgestaltet, sodass die Abgasleitung 11 zumindest in einem an die Brennräume 4 anschließenden Abschnitt eine den Zylindern 3 der ersten Zylindergruppe 3' zugeordnete erste Flut 11' und eine den Zylindern 3 der zweiten Zylindergruppe 3" zugeordnete zweite Flut 11 " aufweist. Die beiden Abgasrückführleitungen 14 sind dementsprechend jeweils einer dieser Fluten 8', 8" bzw. 11', 11" zugeordnet. Im Beispiel enthält jede Rückführleitung 14 einen Abgasrückführkühler 17.

Ferner ist der Kolbenmotor 1 im dargestellten Beispiel aufgeladen, sodass zumindest eine Ladeeinrichtung vorgesehen ist. Im Beispiel sind zwei Ladeeinrichtungen vorgesehen, nämlich eine erste Ladeeinrichtung 18 und eine zweite Ladeeinrichtung 19. Beide Ladeeinrichtungen 18, 19 sind im Beispiel als Abgasturbolader ausgestaltet. Dementsprechend umfasst die erste Ladeeinrichtung 18 einen ersten Verdichter 20, der in der Frischluftleitung 8 angeordnet ist und der über eine erste Antriebswelle 21 mit einer ersten Turbine 22 antriebsverbunden ist, die in der Abgasleitung 11 angeordnet ist. Die zweite Ladeeinrichtung 19 umfasst dementsprechend einen zweiten Verdichter 23, der in der Frischluftleitung 8 angeordnet ist und über eine zweite Antriebswelle 24 mit einer zweiten Turbine 25 antriebsverbunden ist, die in der Abgasleitung 11 angeordnet ist. Dabei ist der zweite Verdichter 23 stromab des ersten Verdichters 20 angeordnet, während die zweite Turbine 25 stromauf der ersten Turbine 22 angeordnet ist. Zwischen dem ersten Verdichter 20 und dem zweiten Verdichter 23 kann ein erster Ladeluftkühler 26 in der Frischluftleitung 8 angeordnet sein. Zwischen dem zweiten Verdichter 23 und den Brennräumen 4 kann ein zweiter Ladeluftkühler 27 in der Frischluftleitung 8 angeordnet sein.

Der Kolbenmotor 1 ist außerdem mit wenigstens einem Zusatzventil 28 ausgestattet. Im Beispiel der Fig. 1 sind zwei derartige Zusatzventile 28 vorgesehen, nämlich ein erstes Zusatzventil 28' und ein zweites Zusatzventil 28". Das jeweilige Zusatzventil 28 ist in der Frischluftanlage 7 stromauf der Einlassventile 5 angeordnet. Im Beispiel ist in den beiden Fluten 8',8" jeweils ein derartiges Zusatzventil 28 angeordnet. Das erste Zusatzventil 28' ist in der ersten Frischluftflut 8' angeordnet, während das zweite Zusatzventil 28" in der zweiten Frischluftflut 8" angeordnet ist. Jedes Zusatzventil 28 ist dadurch drei Brennräumen 4 zugeordnet.

Um das Beschleunigungsvermögen des Kolbenmotors 1 steigern zu können, kann die Abgasrückführanlage 13 entsprechend Fig. 1 mit wenigstens einem Sperrventil 51 ausgestattet sein, mit dessen Hilfe ein in der jeweiligen Rückführleitung 14 geführter, durch Pfeile angedeuteter Rückführpfad 52 gesperrt werden kann. Da somit kein Druckausgleich über die Abgasrückführung erfolgt, steht mehr Luft zur Verfügung.

Zumindest eine der Turbinen 22,25, kann entsprechend Fig. 1 variabel ausgestaltet sein. Dabei sind Turbinen mit Wastegate 54 oder mit variabler Turbinengeometrie 53 einsetzbar. Im Beispiel ist nur die zweite Turbine 25 mit einer solchen variablen Turbinengeometrie 53 ausgestattet. Die variable Turbinengeometrie 53 ermöglicht eine Veränderung des Einströmquerschnitts der jeweiligen Turbine 25. Auf diese Weise kann zum einen bei einem reduzierten Abgasmassenstrom die jeweilige Turbine 25 auf einer erhöhten Drehzahl gehalten werden, um so im Falle einer Lastanforderung das sog. Turboloch, also die Reaktionszeit des Abgasturboladers 19 zu reduzieren. Zum anderen kann mit Hilfe der variablen Turbinengeometrie 53 der Staudruck im Abgas stromauf der jeweiligen Turbine 25 vergrößert werden, wodurch das Druckgefälle zwischen Abzweigstelle 15 und Einleitstelle 16 für die Effektivität der Abgasrückführanlage 13 erhöht werden kann. Hierbei steigt jedoch der Abgasgegendruck, gegen den der Kolbenmotor 1 arbeitet. In der Folge nimmt bei gleicher Motorlast der Kraftstoffverbrauch zu.

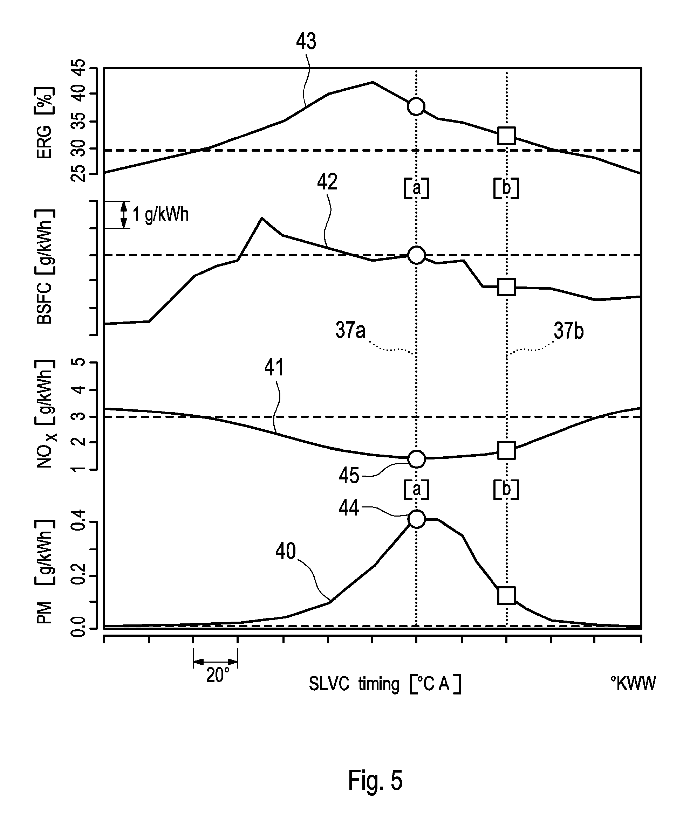

In Betriebspunkten mit reduzierter Last und/oder mit reduzierter Drehzahl kann die variable Turbinengeometrie 53 zum Einstellen eines vergleichsweise großen Einströmquerschnitts betätigt werden. In der Folge nimmt der Abgasgegendruck ab. Eine damit üblicherweise einhergehende Reduzierung der Abgasrückführrate kann durch eine entsprechende Phasenlage des jeweiligen Zusatzventils 28 entsprechend Fig. 5 ausgeglichen werden. In der Folge kann im jeweiligen Betriebspunkt eine hinreichend große Abgasrückführrate auch ohne Gegendruckerhöhung über die variable Turbinengeometrie 53 realisiert werden. Somit kann der Kraftstoffverbrauch der Brennkraftmaschine 1 gesenkt werden.

Für Turbinen mit Wastegate 54 gelten analoge Zusammenhänge, da der durch das Wastegate 54 beeinflusste Abgasgegendruck die Abgasrückführrate steuert bzw. beeinflusst. In Fig. 1 ist exemplarisch die erste Turbine 22 mit einem Wastegate 54 zum Steuern eines die Turbine 22 zumindest teilweise umgehenden Bypasses 55 ausgestattet. Durch Schließen des Wastegates 54 steigt der Abgasdruck und die Abgasrückführrate nimmt zu.

Bei einer aufgeladenen Brennkraftmaschine 1, die in der Abgasanlage 10 zumindest eine Turbine 22 aufweist, die mit einem Wastegate 54 zum Steuern eines die Turbine 22 zumindest teilweise umgehenden Bypasses 55 ausgestattet ist, kann in Betriebspunkten mit reduzierter Last und/oder Drehzahl das jeweilige Wastegate 54 so betätigt werden, dass sich ein relativ großer Strömungsquerschnitt für den Bypass 55 einstellt, während das wenigstens eine Zusatzventil 28 so betätigt wird, dass sich die gewünschte Abgasrückführrate einstellt.

Eine der Turbinen 22, 25, hier die stromauf angeordnete zweite Turbine 25 kann bei einer anderen Ausführungsform als Zwillingsturbine 47 ausgestaltet sein und einen ersten Einlass 48 sowie einen zweiten Einlass 49 aufweisen. An den ersten Einlass 48 ist die erste Abgasflut 11' angeschlossen, während an den zweiten Einlass 49 die zweite Abgasflut 11" angeschlossen ist. Somit ist letztlich die erste Zylindergruppe 3' einer nicht gezeigten ersten Teilturbine der Zwillingsturbine 47 zugeordnet, während die zweite Zylindergruppe 3" einer nicht gezeigten zweiten Teilturbine der Zwillingsturbine 47 zugeordnet ist.

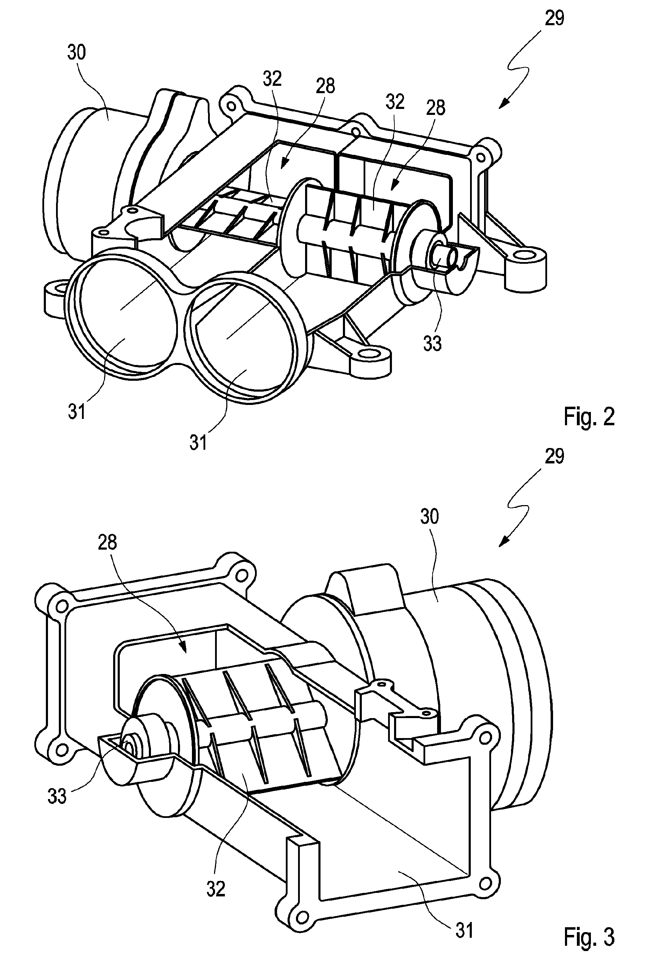

Fig. 2 zeigt ein Beispiel für eine Zusatzventileinrichtung 29, die zwei Zusatzventile 28 aufweist, die über einen gemeinsamen Antrieb 30 betätigt werden können. Erkennbar umfasst die Zusatzventileinrichtung 29 zwei gasdicht voneinander getrennte Leitungsabschnitte 31, mit denen die Zusatzventileinrichtung 29 in die beiden Fluten 8',8" der Frischluftanlage 7 eingebunden werden kann. Das jeweilige Zusatzventil 28 enthält im jeweils zugeordneten Kanalabschnitt 31 ein Ventilglied 32, das im Beispiel durch eine Klappe gebildet ist, die insbesondere auch als Schmetterlingsklappe bezeichnet werden kann. Die Ventilglieder 32 sind drehfest auf einer gemeinsamen Welle 33 angeordnet, die mit dem Antrieb 30 antriebsverbunden ist. Der Antrieb 30 ist bevorzugt dazu ausgestaltet, die Ventilglieder 32 rotieren zu lassen. Die Drehzahl des Antriebs 30 bzw. der Ventilglieder 32 entspricht bei einem 4-Zylinder-Motor 1 mit zwei Frischluftfluten 8', 8" bevorzugt genau der halben Drehzahl einer in Fig. 1 angedeuteten Kurbelwelle 34 des Kolbenmotors 1. Bei einem 6-Zylinder-Motor 1 mit zwei Frischluftfluten 8', 8" wird eine Klappendrehzahl bevorzugt, die 2/3 der Kurbelwellendrehzahl entspricht. Bei einem 8-Zylinder-Motor 1 mit zwei Frischgasfluten 8', 8" ist die Klappendrehzahl bevorzugt gleich der Kurbelwellendrehzahl. Vorzugsweise kann die Zusatzventileinrichtung 29 zwei separate Antriebe 30 für die beiden Ventilglieder 32 aufweisen, so dass diese unabhängig voneinander betrieben werden können.

Fig. 3 zeigt eine weitere Ausführungsform einer derartigen Zusatzventileinrichtung 29, die abweichend von der in Fig. 2 gezeigten Ausführungsform nur ein einziges Zusatzventil 28 aufweist. Dementsprechend umfasst diese Ausführungsform auch nur einen Kanalabschnitt 31 und ein Ventilglied 32, das im Kanalabschnitt 31 angeordnet ist und mit dem Antrieb 30 über die Welle 33 antriebsverbunden ist. Vorzugsweise sind zwei derartige Zusatzventileinrichtungen 29 vorhanden, die unabhängig voneinander betätigt werden können.

Die in den Fig. 2 und 3 gezeigten Ausführungsformen veranschaulichen Beispiele für geeignete Zusatzventile 28, die bei ihrer Betätigung den jeweiligen Frischluftpfad 9 abwechselnd öffnen und sperren können. Bspw. rotiert das jeweilige Ventilglied 32 im Betrieb des Kolbenmotors 1, wobei es mit jeder vollständigen Umdrehung zweimal eine Schließstellung durchfährt, während es zwischen zwei aufeinander folgenden Schließstellungen offen ist. Der zeitliche Abstand zwischen zwei aufeinander folgenden Schließstellungen oder Schließphasen definiert eine Schaltfrequenz des jeweiligen Zusatzventils 28. Zweckmäßig ist das jeweilige Zusatzventil 28 synchron zur Kurbelwelle 34 betätigt, sodass zumindest bei einer stationären Betätigung des jeweiligen Zusatzventils 28 eine konstante Korrelation zwischen der Drehzahl der Kurbelwelle 34 und der Schaltfrequenz des jeweiligen Zusatzventils 28 vorliegt. Beispielsweise rotiert das Ventilglied 32 mit der halben oder mit 2/3 oder mit der gleichen oder mit der doppelten oder mit der dreifachen Drehzahl der Kurbelwelle 34.

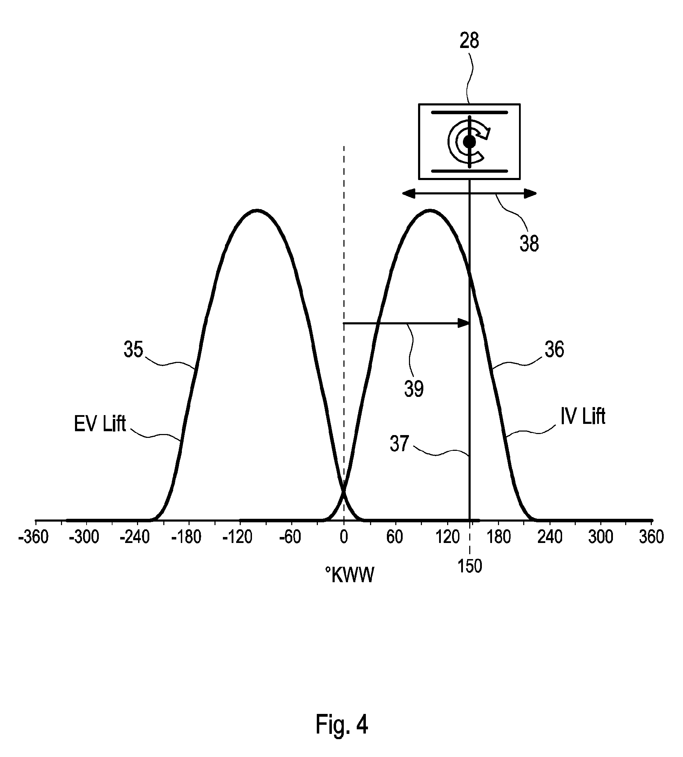

Die vorstehend genannte Korrelation zwischen Kurbelwelle 34 und Zusatzventil 28 wird mit Bezug auf das Diagramm der Fig. 4 näher erläutert. In diesem Diagramm zeigt die Abszisse den Kurbelwellenwinkel in Winkelgraden, kurz °KWW. Die Ordinate zeigt den Hub der Gaswechselventile 5, 6. In das Diagramm sind eingetragen eine Auslassventilerhebungskurve 35 sowie eine Einlassventilerhebungskurve 36. Die beiden Erhebungskurven 35,36 überschneiden sich in einem kleinen Bereich. Der zugehörige Schnittpunkt ist gezielt bei 0° KWW angeordnet und entspricht im Übrigen einem oberen Totpunkt einer Kolbenbewegung des dem betrachteten Brennraum 4 zugeordneten Kolbens.

Ferner enthält das Diagramm der Fig. 4 in Form einer vertikalen Linie einen Schließzeitpunkt 37 des dem betrachteten Brennraum 4 zugeordneten Zusatzventils 28, das in Fig. 4 ebenfalls zur Veranschaulichung symbolisch dargestellt ist. Dieser Schließzeitpunkt 37 befindet sich bei einer stationären Betätigung des Zusatzventils 28 immer in der gleichen Relation zur Kurbelwelle 34, steht also stets beim gleichen Kurbelwellenwinkel. Im Beispiel befindet sich der Schließzeitpunkt 37 bei etwa 150° KWW. Die relative Lage des Schließzeitpunkts 37 relativ zum Kurbelwellenwinkel der Kurbelwelle 34 definiert eine Phasenlage zwischen dem Zusatzventil 28 und der Kurbelwelle 34. Entsprechend einem Doppelpfeil 38 ist diese Phasenlage verstellbar. Der Schließzeitpunkt 37 ist sowohl in Richtung kleinerer Kurbelwellenwinkel als auch in Richtung größerer Kurbelwellenwinkel verstellbar, um so die Phasenlage zwischen Zusatzventil 28 und Kurbelwelle 34 zu verändern. Ein Pfeil 39 deutet an, dass der Schließzeitpunkt 37 bspw. von einer Ausgangsphasenlage, bei welcher der Schließzeitpunkt 37 bei 0° KWW liegt, also deckungsgleich zur Ordinate verläuft, bis zur gezeigten Position verschiebbar ist, bei welcher der Schließzeitpunkt 37 bei etwa 150° KWW liegt. Es ist klar, dass grundsätzlich auch größere Kurbelwellenwinkel für den Schließzeitpunkt 37 einstellbar sind, z. B. kann eine Verstellbarkeit bis 240° KWW oder noch größer vorgesehen sein, z. B. um den Schließvorgang innerhalb des Einlassventilhubs oder kurz (etwa 20°) davor oder kurz (etwa 20°) danach realisieren zu können.

Im Diagramm der Fig. 5 ist auf der Abszisse die Phasenlage für den Schließzeitpunkt 37 in °KWW bzw. in °CA wiedergegeben. Die Ordinate enthält übereinander die Werte für einen Partikelgehalt (PM) der Abgase, die Werte für einen Stickoxidgehalt (NOx) der Abgase, die Werte für einen Kraftstoffverbrauch (BSFC) des Kolbenmotors 1 sowie die Werte für eine Abgasrückführrate (EGR). Dementsprechend enthält das Diagramm der Fig. 5 einen Verlauf 40, der die Abhängigkeit des Partikelgehalts im Abgas von der Phasenlage des Zusatzventils 28 veranschaulicht, einen Verlauf 41, der die Abhängigkeit des Stickoxidgehalts von der Phasenlage des Zusatzventils 28 veranschaulicht, einen Verlauf 42, der die Abhängigkeit des Kraftstoffverbrauchs von der Phasenlage des Zusatzventils 28 veranschaulicht, und einen Verlauf 43, der die Abhängigkeit der Abgasrückführrate von der Phasenlage des Zusatzventils 28 veranschaulicht. Diese Zusammenhänge gelten dabei in einem stationären Betriebspunkt des Kolbenmotors 1, der durch eine konstante Last und eine konstante Drehzahl definiert ist.

Erkennbar sind die einzelnen Verläufe 40 bis 43 völlig unterschiedlich und teilweise gegenläufig. Beispielhaft sind im Diagramm der Fig. 5 für den Schließzeitpunkt 37 eine erste Phasenlage a sowie eine zweite Phasenlage b eingetragen. Der jeweilige Schließzeitpunkt wird dementsprechend mit 37a bzw. 37b bezeichnet. Beim ersten Schließzeitpunkt 37a besitzt der Partikelgehalt gemäß dem Verlauf 40 ein Maximum 44, während der Stickoxidgehalt gemäß dem Verlauf 41 dort ein Minimum 45 besitzt. Gleichzeitig stellt sich für den Kraftstoffverbrauch im Vergleich zu einer mit unterbrochener Linie eingetragenen Basis gemäß dem Verlauf 42 quasi keine Veränderung ein, während die Abgasrückführrate gemäß dem Verlauf 43 einen vergleichsweise hohen Wert nimmt. Eine derartige Phasenlage kann für einen Volllastbetrieb bzw. für hohe Drehzahlen mit minimalen Stickoxidemissionen von Vorteil sein, wenn aufgrund der hohen Abgastemperaturen permanent eine ausreichende Regeneration eines Partikelfilters realisiert werden kann, der die vermehrt auftretenden Russpartikel aufnimmt.

Die zweite Phasenlage b entsprechend dem zweiten Schließzeitpunkt 37b symbolisiert einen optimierten Kompromiss für den Partikelgehalt, den Stickoxidgehalt und den Kraftstoffverbrauch. Da die genannten Parameter für die Umwelt eine erhöhte Bedeutung haben, werden sie im Folgenden auch als Umweltparameter bezeichnet. Es ist klar, dass neben den drei genannten Umweltparametern auch weitere Umweltparameter mit Hilfe der Phasenlage des Zusatzventils 28 beeinflussbar sein können.

Grundsätzlich kann der Kolbenmotor 1 mit Hilfe einer in Fig. 1 vereinfacht dargestellten Steuereinrichtung 46 so betrieben werden, dass eine gewünschte Abgasrückführrate dadurch eingestellt wird, dass mit Hilfe der Steuereinrichtung 46 das jeweilige Zusatzventil 28 entsprechend betätigt wird. Der in Fig. 5 erläuterte Zusammenhang zeigt, dass zum Einstellen der gewünschten Abgasrückführrate entsprechend dem Verlauf 43 lediglich die zugehörige Phasenlage für das Zusatzventil 28 eingestellt werden muss. Zielgröße dieser Regelung oder Einstellung ist dann die Abgasrückführrate. Dies kann für bestimmte Betriebszustände bzw. Betriebspunkte des Kolbenmotors 1 zweckmäßig sein. Der hier vorgestellte Kolbenmotor 1 bzw. das hier vorgestellte Betriebsverfahren geht jedoch einen anderen Weg. Zielgröße für die Betätigung des jeweiligen Zusatzventils 28 ist hier nicht die Abgasrückführrate, sondern zumindest einer der vorstehend exemplarisch genannten Umweltparameter des Kolbenmotors 1. Bspw. kann vorgesehen sein, die Betätigung des jeweiligen Zusatzventils 28 bzw. dessen Phasenlage im jeweiligen Betriebspunkt so einzustellen, dass sich für den Stickoxidgehalt ein Minimum ergibt. Dies entspricht in Fig. 5 der ersten Phasenlage a. Ebenso kann erwünscht sein, den Partikelgehalt im Abgas unter einem vorbestimmten Grenzwert zu halten. Gemäß Fig. 5 ist dann eine andere Phasenlage für das jeweilige Zusatzventil 28 einzustellen. Ebenso kann erwünscht sein, eine bestimmte Reduzierung für den Kraftstoffverbrauch zu realisieren, was entsprechend Fig. 5 wiederum ein anderes Timing für den Schließzeitpunkt 37 des jeweiligen Zusatzventils 28, also eine andere Phasenlage, erfordert. Bevorzugt wird jedoch eine Ausführungsform, bei welcher für den jeweiligen aktuellen Betriebspunkt die Betätigung bzw. die Phasenlage des jeweiligen Zusatzventils 28 so eingestellt wird, dass sich für zumindest zwei der Umweltparameter ein optimaler Kompromiss einstellt. In Fig. 5 ist eine derartige Kompromisseinstellung durch die zweite Phasenlage b angedeutet. Die zugehörige Abgasrückführrate ergibt sich dann von selbst.

Eine derartige Verschiebung der Phasenlage des jeweiligen Zusatzventils 28 kann bspw. dadurch realisiert werden, dass der zugehörige Antrieb 30 kurzzeitig mit erhöhter oder reduzierter Geschwindigkeit betrieben wird, um einen entsprechenden Vorlauf oder Nachlauf für die Phasenlage des Ventilglieds 32 relativ zur Kurbelwelle 34 zu realisieren. Ebenso können übergeordnete Phasensteller vorgesehen sein, welche die Winkellage zwischen Drehantrieb 30 und Antriebswelle 32 verändern können, um dadurch die Phasenlage zu variieren. Während der Veränderung der Phasenlage arbeitet das jeweilige Zusatzventil 28 instationär. Die Adaption der Phasenlage kann dabei dynamisch durchgeführt werden, also während des Betriebs des Kolbenmotors 1. Dabei kann die Anpassung der Phasenlage sehr schnell, also innerhalb sehr kurzer Zeit durchgeführt werden. Bspw. kann eine Phasenänderung in einer Zeit durchgeführt werden, die kleiner ist als 360° KWW, also innerhalb einer vollständigen Umdrehung der Kurbelwelle 34 liegt. Denkbar ist z.B. auch eine Ausführungsform, bei der den beiden Ventilgliedern 32 zwar ein gemeinsamer Antrieb 30 zugeordnet ist, jedoch zwei separate Phasensteller zugeordnet sind, mit denen die Phasenlagen der einzelnen Ventilglieder 32 bzw. des jeweiligen Zusatzventils 8 unabhängig voneinander einstellbar sind.

Fig. 6 zeigt in einem Diagramm einen beispielhaften Zusammenhang zwischen Stickoxidgehalt NOₓ beziehungsweise Kraftstoffverbrauch be bzw. Partikelgehalt PM (jeweils auf der Abszisse) und der Last (auf der Ordinate) bei einem stationären Betrieb des Kolbenmotors 1 sowie bei konstanter Drehzahl n. Ein derartiger Zusammenhang kann in bestimmten Betriebsbereichen (Lastzuständen, Drehzahl) auftreten. Erkennbar ist dabei ein Verlauf 50, der die besagten Zusammenhänge repräsentiert. Anhand dieses Diagramms wird im Folgenden das hier vorgestellte und insbesondere mit der Steuereinrichtung 46 durchgeführte Betriebsverfahren näher erläutert.

Der Kolbenmotor 1 soll mit einer Ziellast 56 betrieben werden, die unterhalb einer Volllast 57 liegt. Im Diagramm der Fig. 6 liegt somit die Ziellast 56 links von der Volllast 57, also bei kleineren Lastwerten. Bei konstanter Drehzahl entspricht die Last dabei im Wesentlichen dem an der Kurbelwelle 34 abgreifbaren Drehmoment. Bei herkömmlicher Vorgehensweise werden alle Zylinder 3 des Kolbenmotors 1 symmetrisch mit entsprechenden Anteilen dieser Ziellast 56 betrieben. Wie der Verlauf 50 zeigt, kann zumindest bei bestimmten Betriebspunkten in der Ziellast 56 ein vergleichsweise hoher Wert für wenigstens einen der Umweltparameter Stickoxidgehalt, Kraftstoffverbrauch und Partikelgehalt auftreten.

Beim hier vorgestellten Betriebsverfahren werden die Zylinder 3 der ersten Zylindergruppe 3' also z. Bsp. die Zylinder 1 - 3 mit einer ersten Last 58 betrieben, die gegenüber der Ziellast 56 reduziert ist. Im Unterschied dazu werden die Zylinder 3 der zweiten Zylindergruppe 3", also z. Bsp. die Zylinder 4 - 6 mit einer zweiten Last 59 betrieben, die gegenüber der Ziellast 56 erhöht ist. Pfeile 65 deuten dabei die asymmetrische Aufteilung der Ziellast 56 auf die erste Last 58 der Zylinder 3 der ersten Gruppe 3' und auf die zweite Last 59 der Zylinder 3 der zweiten Gruppe 3" an. Entsprechend dem Verlauf 50 liegen in beiden Lastpunkten 58, 59 der beiden Zylindergruppen 3', 3" bessere Werte für wenigstens einen der genannten Umweltparameter vor. In der Folge kann zumindest einer dieser Umweltparameter für die Gesamtheit der Zylinder 3 verbessert werden. Die Verschiebung der Lasten zu kleineren bzw. zu höheren Lasten erfolgt dabei insbesondere symmetrisch, und zwar zweckmäßig so, dass insgesamt als resultierende Last die gewünschte Ziellast 56 vorliegt. Da innerhalb der einzelnen Zylindergruppen 3', 3" jedoch verbesserte Umweltparameter vorliegen, ergibt sich für den Kolbenmotor 1 durch die vorgeschlagene Aufteilung der Lasten ein ökologisch und/oder ökonomisch verbesserter Betrieb. Die erste Last 58 liefert einen nennenswerten Anteil an der resultierenden Last, wodurch die Lastverteilung entlang der Kurbelwelle 34 vergleichsweise günstig ist. Sofern die Reduzierung der ersten Last 58 für die Einstellung günstiger Umweltparameter keinen weiteren Vorteil mehr verspricht, kann die Steuereinrichtung 46 auch zu einem anderen Betriebsverfahren wechseln, das bspw. eine Abschaltung der Zylinder 3 der ersten Zylindergruppe 3' vorsieht. Ausschlaggebend für die Umschaltung ist dann nicht der aktuelle Lastbedarf, sondern die Einstellbarkeit optimaler Werte für die Umweltparameter.

Die zweite Last 59 kann im Extremfall bis zur Volllast 57 erhöht werden.

Das Verschieben der Lastpunkte entlang des Verlaufs 50 erfolgt vorteilhafter Weise durch Variieren einer den Brennräumen 4 zugeführten Kraftstoffmenge. Zum Einstellen der ersten Last 58 kann bspw. die den Zylindern 3 der ersten Zylindergruppe 3' zugeführte Kraftstoffmenge gegenüber einem Betrieb dieser Zylinder 3 mit der Ziellast 56 reduziert werden. Im Unterschied dazu kann die zweite Last 59 z. Bsp. dadurch eingestellt werden, dass die Zylinder 3 der zweiten Zylindergruppe 3" mit einer gegenüber einem Betrieb der Zylinder 3 mit der Ziellast 56 erhöhten Kraftstoffmenge versorgt werden. Dabei ist es durchaus möglich, dass die Kraftstoffreduzierung zum Einstellen der ersten Last 58 größer ausfällt als die Kraftstofferhöhung zum Einstellen der zweiten Last 59, wodurch insgesamt weniger Kraftstoff benötigt wird, um die gewünschte Ziellast 56 einzustellen.

Desweiteren kann wie weiter oben bereits erläutert worden ist, im jeweiligen Lastpunkt 58 bzw. 59 durch Einstellen der Phasenlage der Zusatzventile 28 eine Optimierung der Umweltparameter realisiert werden. Dabei lassen sich die Phasenlagen der beiden Zusatzventile 28', 28" unabhängig voneinander variieren, so dass die Optimierung der beiden Betriebspunkte 58, 59 unabhängig, insbesondere mit Hilfe unterschiedlicher Phasenlagen, erfolgen kann.

Fig. 7 zeigt in einem Diagramm den Zusammenhang zwischen der Luftzahl Lambda (Ordinate) und der Motorlast (Abszisse). Veranschaulicht wird besagter Zusammenhang durch eine Verlaufskurve 60. Auf dieser Verlaufskurve 60 finden sich wieder die erste Last 58 und die zweite Last 59, die den beiden Zylindergruppen 3', 3" zugeordnet sind. Im Fall einer Änderung der Ziellast hin zu größeren Lasten, kann es entsprechend Fig. 4 sinnvoll sein, zunächst nur die Zylinder 3 der zweiten Zylindergruppe 3" zur Anpassung der zweiten Last 59 zu betätigen. Diese Vorgehensweise ist dann sinnvoll, wenn die Änderungsgeschwindigkeit, mit welcher die Ziellast verändert bzw. angehoben werden soll, unterhalb eines vorgegebenen Grenzwerts liegt. Mit anderen Worten, bei kleinen Änderungsgeschwindigkeiten der Ziellast wird die gewünschte Laständerung durch Verschieben des Lastpunkts 59 ausschließlich der Zylinder 3 der zweiten Zylindergruppe 3" realisiert, während die Zylinder 3 der ersten Zylindergruppe 3' in ihrem günstigen ersten Lastpunkt 58 verbleiben. Beispielsweise wird die Laständerung für geringe Drehmomentanpassung dadurch realisiert, dass die erste Zylindergruppe 3' weiterhin mit minimalen Emissionswerten betrieben wird, währen die zweite Zylindergruppe 3" für die erhöhte Lastanforderung optimiert wird.

Sobald nach Abschluss der Laständerung wieder ein stationärer Betriebspunkt vorliegt, kann dann entsprechend die erste Last 58 nachgeführt werden, während gleichzeitig die zweite Last 59 angepasst wird. Im hier beschriebenen Beispiel, bei dem eine Lasterhöhung durchgeführt wird, wird somit zunächst nur die zweite Last 59 überproportional erhöht, um über die resultierende Last die gewünschte Ziellast einstellen zu können. Sobald dann die Ziellast stationär ist, wird die erste Last 58 etwas erhöht während die zweite Last 59 entsprechend reduziert wird, bis sich wieder ein optimaler Kompromiss für die Umweltparameter innerhalb der einzelnen Zylindergruppen 3', 3" bzw. über sämtliche Zylinder 3 eingestellt ist.

Um die Umweltparameter bei den einzelnen Zylindergruppen 3', 3" mit Hilfe der beiden Zusatzventile 28', 28" optimieren zu können, kann es zusätzlich oder alternativ zum Einstellen unterschiedlicher Phasenlagen vorgesehen sein, die beiden Zusatzventile 28 mit unterschiedlichen Frequenzen zu betreiben. Dabei ist es insbesondere auch möglich, eines der Zusatzventile 28 in einer Offenstellung zu deaktivieren, so dass dann nur noch das jeweils andere Zusatzventil 28 aktiv ist und mit seiner Frequenz die zugehörige Frischluftflut 8' bzw. 8" öffnet und sperrt.

Fig. 8 veranschaulicht in einem weiteren Diagramm einen Zusammenhang zwischen mehreren Umweltparametern. Auf der Ordinate sind bspw. der Partikelgehalt PM und der Kraftstoffverbrauch be aufgetragen, während die Abszisse den Stickoxidgehalt NOx wiedergibt. Eine Verlaufskurve 61 zeigt, dass ein abnehmender Stickoxidgehalt mit einem zunehmenden Partikelgehalt sowie mit einem zunehmenden Kraftstoffverbrauch einhergeht. In bestimmten Betriebspunkten kann jedoch der hier dargestellte Verlauf 61 entstehen, der es ermöglicht, sowohl die Stickoxide als auch die Partikel und den Kraftstoffverbrauch zu reduzieren. Ein erster Betriebspunkt 62 (Phase 1) zeigt einen Zustand, der durch eine entsprechende erste Phasenlage des ersten Zusatzventils 28' für die Zylinder 3 der ersten Zylindergruppe 3' realisierbar ist. Erkennbar zeigt dieser erste Betriebspunkt 62 einen extrem niedrigen Stickoxidgehalt in Verbindung mit vergleichsweise hohen Werten für die Partikelemission und den Kraftstoffverbrauch. Ein zweiter Betriebspunkt 63 (Phase 2) kann für die Zylinder 3 der zweiten Zylindergruppe 3" eingestellt werden, der zu einer zweiten Phasenlage führt, die sich von der ersten Phasenlage unterscheidet. Erkennbar besitzt dieser zweite Betriebspunkt 63 vergleichsweise niedrige Werte für den Partikelgehalt und den Kraftstoffverbrauch, während ein vergleichsweise hoher Stickoxidgehalt entsteht. Bemerkenswert ist nun der daraus resultierende Betriebspunkt 64 (Summenpunkt), der aufgrund der hier vorliegenden Krümmung des Verlaufs 61 unterhalb des Verlaufs 61 liegt und daher einen Kompromiss darstellt, der im Vergleich zu einem symmetrischen Betrieb aller Zylinder 3, bei dem sich die Umweltparameter exakt entlang dem Verlauf 61 bewegen, reduzierte Werte für den Stickoxidgehalt einerseits und für die Partikelemission und den Kraftstoffverbrauch andererseits besitzt. Pfeile 66 deuten dabei das Einstellen des optimierten Kompromisses für die Umweltparameter an.

## Patentansprüche

1. Verfahren zum Betreiben eines mehrzylindrigen Kolbenmotors (1), insbesondere eines Kraftfahrzeugs,
- bei dem zum Einstellen einer unterhalb einer Volllast (57) liegenden Ziellast (56) die Zylinder (3) einer mindestens einen Zylinder (3) aufweisenden ersten Zylindergruppe (3') des Kolbenmotors (1) mit einer gegenüber der Ziellast (56) reduzierten ersten Last (58) und die Zylinder (3) einer mindestens einen Zylinder (3) aufweisenden zweiten Zylindergruppe (3") des Kolbenmotors (1) mit einer gegenüber der Ziellast (56) erhöhten zweiten Last (59) betrieben werden,
- bei dem diese Lasten (58, 59) so gewählt werden, dass sich als resultierende Last die Ziellast (56) einstellt,
- bei dem diese Lasten (58, 59) so eingestellt werden, dass sich zumindest für einen Umweltparameter des Kolbenmotors (1), wie z. Bsp. Kraftstoffverbrauch, Stickoxidgehalt im Abgas und Partikelgehalt im Abgas, ein gegenüber einem Betrieb aller Zylinder (3) mit der Ziellast (56) verbesserter Wert einstellt.

2. Verfahren nach Anspruch 1,
**dadurch gekennzeichnet,**
**dass** die erste Last (58) **dadurch** eingestellt wird, dass die Zylinder (3) der ersten Zylindergruppe (3') mit einer gegenüber einem Betrieb der Zylinder (3) mit der Ziellast (56) reduzierten Kraftstoffmenge versorgt werden, während die zweite Last (59) **dadurch** eingestellt wird, dass die Zylinder (3) der zweiten Zylindergruppe (3") mit einer gegenüber einem Betrieb der Zylinder (3) mit der Ziellast (56) erhöhten Kraftstoffmenge versorgt werden.

3. Verfahren nach Anspruch 1 oder 2,
**dadurch gekennzeichnet,**
**dass** im Fall einer Änderung der Ziellast (56), deren Änderungsgeschwindigkeit unterhalb eines vorgegebenen Grenzwerts liegt, zunächst nur die Zylinder (3) der zweiten Zylindergruppe (3") zur Anpassung der zweiten Last (59) betätigt werden.

4. Verfahren nach Anspruch 3,
**dadurch gekennzeichnet,**
**dass** bei Erreichen einer stationären Ziellast (56) die erste Last (58) nachgeführt wird und die zweite Last (59) entsprechend angepasst wird.

5. Verfahren nach einem der Ansprüche 1 bis 4,
**dadurch gekennzeichnet,**
**dass** das Verändern des wenigstens einen Umweltparameters mit Hilfe von wenigstens einem Zusatzventil (28) erfolgt, das in einer den Zylindern (3) Frischluft zuführenden Frischluftanlage (7) stromauf von den Ladungswechsel steuernden Einlassventilen (5) angeordnet ist.

6. Verfahren nach Anspruch 5,
**dadurch gekennzeichnet,**
**dass** eine erste Frischluftflut (8') zur Frischluftversorgung der Zylinder (3) der ersten Zylindergruppe (3') ein erstes Zusatzventil (28') zum Öffnen und Sperren eines durchströmbaren Querschnitts der ersten Frischluftflut (8') aufweist, während eine zweite Frischluftflut (8") zur Frischluftversorgung der Zylinder (3) der zweiten Zylindergruppe (3") ein zweites Zusatzventil (28") zum Öffnen und Sperren eines durchströmbaren Querschnitts der zweiten Frischluftflut (8") aufweist.

7. Verfahren nach Anspruch 5 oder 6,
**dadurch gekennzeichnet,**
**dass** das jeweilige Zusatzventil (28) in einem aktivierten Zustand den zugehörigen Querschnitt mit einer zur Drehzahl einer Kurbelwelle (34) des Kolbenmotors (1) proportionalen Frequenz abwechselnd öffnet und sperrt, wobei zum Verändern des wenigstens einen Umweltparameters eine Phasenlage des jeweiligen Zusatzventils (28) gegenüber einer Drehlage der Kurbelwelle (34) verändert wird.

8. Verfahren nach einem der Ansprüche 5 bis 7,
**dadurch gekennzeichnet,**
**dass** das jeweilige Zusatzventil (28) in der jeweiligen Frischluftflut (8', 8") jeweils stromauf einer Einleitstelle (16) angeordnet ist, über die eine Abgasrückführanlage (13) Abgas von einer Abgasanlage (10) zur Frischluftanlage (7) rückführt, wobei sich eine Abgasrückführrate durch die Betätigung der Zusatzventile (28), insbesondere durch deren Phasenlage relativ zur Kurbelwelle (34), ergibt.

9. Verfahren nach einem der Ansprüche 5 bis 8,
**dadurch gekennzeichnet,**
**dass** ein Schließzeitpunkt (37) des jeweiligen Zusatzventils (28) in einem Bereich von einschließlich 20° Kurbelwellenwinkel vor Einlassbeginn beim jeweiligen Zylinder (3) bis einschließlich 20° Kurbelwellenwinkel nach Einlassende beim jeweiligen Zylinder (3) verstellbar ist, wobei ein Wert von 0° Kurbelwellenwinkel dem oberen Totpunkt eines dem jeweiligen Zylinder (3) zugeordnetem Kolbens beim Ladungswechsel entspricht.

10. Verfahren nach einem der Ansprüche 5 bis 9,
**dadurch gekennzeichnet,**
- **dass** zwei unabhängige Zusatzventile (28', 28") mit separaten Ventilantrieben (30) verwendet werden, oder
- **dass** die beiden Zusatzventile (28', 28") mit einem gemeinsamen Ventilantrieb (30) und mit separaten Phasenstellern verwendet werden.

11. Verfahren nach einem der Ansprüche 5 bis 10,
**dadurch gekennzeichnet,**
**dass** die beiden Zusatzventile (28) mit verschiedenen Frequenzen betrieben werden.

12. Kolbenmotor, insbesondere eines Kraftfahrzeugs,
- mit einer ersten Zylindergruppe (3'), die mindestens einen Zylinder (3) aufweist,
- mit einer zweiten Zylindergruppe (3") die zumindest einen Zylinder (3) aufweist,
- mit einer Steuereinrichtung (46), die so ausgestaltet und/oder programmiert ist, dass sie im Betrieb des Kolbenmotors (1) ein Betriebsverfahren nach einem der Ansprüche 1 bis 11 durchführen kann.

13. Kolbenmotor nach Anspruch 12,
**dadurch gekennzeichnet,**
- **dass** eine den Zylindern (3) Frischluft zuführende Frischluftanlage (7) vorgesehen ist, die eine den Zylindern (3) der ersten Zylindergruppe (3') zugeordnete erste Frischluftflut (8') und eine den Zylindern (3) der zweiten Zylindergruppe (3") zugeordnete zweite Frischluftflut (8") aufweist,
- **dass** eine Abgasrückführanlage (13) vorgesehen ist, die Abgas von einer Abgasanlage (10) den Fluten (8', 8") der Frischluftanlage (7) separat zuführt,
- **dass** jede Frischluftflut (8', 8") ein Zusatzventil (28) aufweist, das stromauf einer Einleitstelle (16) der Abgasrückführanlage (13) angeordnet ist.

14. Kolbenmotor nach Anspruch 12 oder 13,
**dadurch gekennzeichnet,**
**dass** die Steuereinrichtung (46) so ausgestaltet und/oder programmiert ist, dass sie auch eine Zylinderabschaltung der Zylinder (3) der ersten Zylindergruppe (3') oder der Zylinder (3) der zweiten Zylindergruppe (3") durchführen kann.

15. Kolbenmotor nach einem der Ansprüche 12 bis 14,
**dadurch gekennzeichnet,**
- **dass** eine von den Zylindern (3) Abgas abführende Abgasanlage (10) vorgesehen ist, die eine den Zylindern (3) der ersten Zylindergruppe (3') zugeordnete erste Abgasflut (11') und eine den Zylindern (3) der zweiten Zylindergruppe (3") zugeordnete zweite Abgasflut (11 ") aufweist,
- **dass** eine Zwillingsturbine (47), insbesondere eines Abgasturboladers (19), vorgesehen ist, die einen der ersten Abgasflut (11') zugeordneten ersten Einlass (48) und einen der zweiten Abgasflut (11 ") zugeordnetem zweiten Einlass (49) aufweist.
